# EUROPEAN PATENT APPLICATION

(11) **EP 4 501 707 A1**
(43) Date of publication of application: **05.02.2025**
(21) Application number: 24191421.7
(22) Date of filing: 29.07.2024
(51) Int. Cl.: B60Q 3/64, B60Q 3/74, B60Q 3/78, F21V 8/00

(54) **VEHICLE ILLUMINATION APPARATUS**

(30) Priority: 03.08.2023 JP 2023127313
(71) Applicant: Kojima Industries Corporation, Toyota-shi, Aichi 471-0875 (JP)
(72) Inventor: MATSUMURA, Junya, Toyota-shi, Aichi (JP)
(74) Representative: Wunderlich & Heim Patentanwälte PartG mbB

(57) **Abstract**

A vehicle illumination apparatus (12) includes a light source (14) and a lens (16). The lens (16) includes a light guide (30) disposed opposite to the light source (14) and extending toward a vehicle interior, and a body (32) connected to an end of the light guide (30) adjacent to the vehicle interior. The lens (16) is configured to cause light from the light source (14) to be reflected on a side face (50) of the light guide (30) and travel toward the vehicle interior, and at least part of the light is further reflected on a reflection face (61) of the body (32) and directed in an extending direction of the body (32), thereby allowing at least part of the body (32) to function as a decorating illumination portion. The side face (50) of the light guide (30) that reflects light, or a light reflection face, and a further side face (51, 52) of the light guide (30) adjacent to the light reflection face form a rounded corner (70, 71).

## Description

### TECHNICAL FIELD

The present disclosure relates to a vehicle illumination apparatus, and more particularly to an illumination apparatus disposed within a vehicle interior.

### BACKGROUND

Vehicle interior lamps are known, which achieve both a function of a spot illuminator that illuminates a restricted target area near a passenger and a function of a decorating illuminator, which emits decorative light, such as an ambient lighting system, with a single light source. The decorating illumination is visually recognized by a user when lens cut patterns on the rear face of a lens, for example, are illuminated with light.

Such an illumination apparatus is disposed on the ceiling of a vehicle and includes a light source and a lens. The lens is located opposite to the light source and includes a light guide extending toward a vehicle cabin and a body connected to an end of the light guide close to the vehicle cabin. The body extends in a direction intersecting the extending direction of the light guide, and includes lens cut patterns, for example, for emitting decorative light.

Light from the light source travels toward the vehicle cabin while being reflected on a side face of the light guide, and part of the light is further reflected on a reflection face of the body and is guided toward the direction in which the body extends. In this manner, at least part of the body functions as a decorating illumination portion. Further, the light guide emits part of the light entering from the light source into a light incident portion of the light guide, through a light emitting portion of the light guide opposite to the light incident portion, toward the vehicle cabin, thereby functioning as a spot illumination portion.

JP 2020-17359 A (Patent Document 1) discloses a vehicle lamp including a single light source that causes a plurality of light guides to emit light. JP 2018-190623 A (Patent Document 2) discloses a light source device including a light guide member within an internal space. JP 2012-199035 A (Patent Document 3) discloses an LED illumination apparatus including a light guide lens that receives light from an LED light source and has a light reflecting portion.

### SUMMARY

In an illumination apparatus including a light guide and a body as described above, it is necessary to efficiently receive light from a light source and direct the received light to a decorating illumination portion. To guide a large amount of light to a reflection face of the body that splits the light onto the decorating illumination portion, it is necessary to secure a large area of a reflection face (hereinafter referred to as a "reflection side face") of the light guide, from which the light travels toward the reflection face of the body. To maximize the area of the reflection side face of the light guide, the reflection side face and adjacent side faces form corners having a small radius (R). However, light converges to the corners of the light guide having a small R, which causes a user looking at the corners to experience glare.

The present disclosure is therefore aimed toward reducing glare at a corner of the light guide in a vehicle illumination apparatus.

In accordance with an aspect of the disclosure, a vehicle illumination apparatus includes a light source and a lens. The lens includes a light guide disposed opposite to the light source and extending toward a vehicle interior, and a body connected to an end of the light guide adjacent to the vehicle interior and extending in a direction intersecting the light guide. The lens is configured to cause light from the light source to be reflected on a side face of the light guide and travel toward the vehicle interior, at least part of the light reflected on the side face of the light guide being further reflected on a reflection face of the body and directed in a direction in which the body extends, thereby allowing at least part of the body to function as a decorating illumination portion. The side face of the light guide that reflects the light, or a light reflection face, and a further side face of the light guide adjacent to the light reflection face form a corner that has a rounded shape.

Further, in the vehicle illumination apparatus, the side face of the light guide, or the light reflection face, may have a greater width than an opposite side face of the light guide.

Further, in the vehicle illumination apparatus, a connection portion connecting the light guide and the body may have an L-shape cross section.

Further, in the vehicle illumination apparatus, the light guide may include a light incident portion that the light from the light source enters and a light emitting portion disposed opposite to the light incident portion. In association with the rounded shape of the corner of the light guide, the corner may have a larger radius in a portion close to the light emitting portion than in a portion close to the light incident portion.

Further, in the vehicle illumination apparatus, the light guide may be configured to emit part of light entering a light incident portion from the light source into the vehicle interior through a light emitting portion located opposite to the light incident portion, to thereby function as a spot illumination portion.

Further, in the vehicle illumination apparatus, the corner of the light guide may be located at a position that is visible to an occupant within the vehicle interior.

The present disclosure includes a light guide having a corner with a rounded shape. This configuration enables reduction of light convergence at the corner, thereby making a user looking at the corner less likely to feel glare.

### BRIEF DESCRIPTION OF DRAWINGS

An embodiments of the present disclosure will be described based on the following figures, wherein:
FIG.1Ais a perspective view illustrating an overhead console 10;
FIG. 1B illustrates a design face of a lens 16;
FIG. 1C is a perspective view of the lens 16;
FIG. 2A is a perspective view illustrating a holder 20 and part of the lens 16;
FIG. 2B schematically illustrates how a corner of a light guide 30 is seen;
FIG. 3A schematically illustrates traveling of light within the lens 16;
FIG. 3B illustrates a reflection face 61 of a body 32 of the lens 16;
FIG. 4A illustrates the light guide 30 as viewed in the direction of a light source;
FIG. 4B is a perspective side view of the light guide 30;
FIG. 5Ais a perspective view of the light guide 30 as viewed in a first direction;
FIG. 5B is a perspective view of the light guide 30 as viewed in a second direction;
FIG. 5C is a perspective view of the light guide 30 as viewed in a third direction;
FIG. 6A is an explanatory view regarding convergence of light within a lens 100;
FIG. 6B is an explanatory view regarding convergence of light within a lens 101;
FIG. 7 illustrates a light guide 130 according to a comparison example as viewed in the direction of the light source;
FIG. 8A illustrates a light guide 230 according to prior art as viewed in the direction of the light source; and
FIG. 8B is a perspective view illustrating the light guide 230 according to prior art as viewed from the side.

### DESCRIPTION OF EMBODIMENTS

An embodiment of the present disclosure will be described below by reference to the drawings. It should be noted that the present disclosure is not limited to the embodiment described below. In all drawings, the same elements are denoted with the same reference numerals and are not described repeatedly.

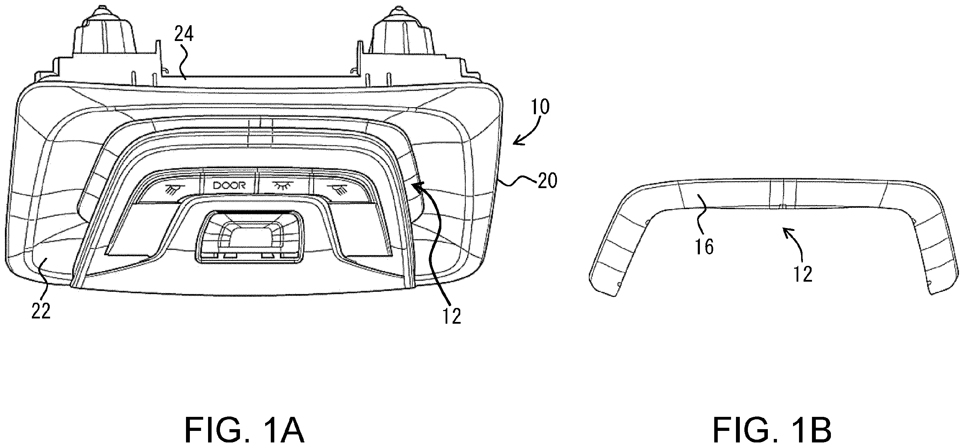

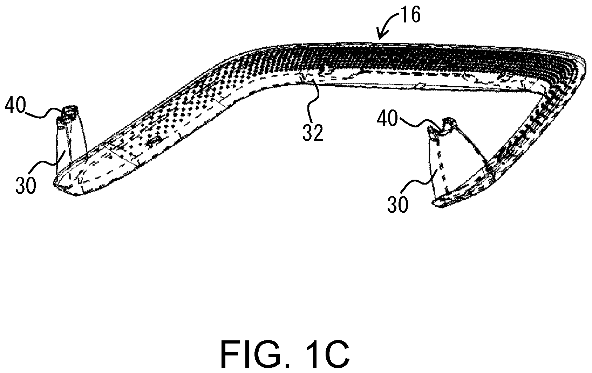

FIG. 1Ais a perspective view illustrating an overhead console 10. The overhead console 10 is disposed on the ceiling within an interior of a vehicle, between a driver's seat and a passenger seat at the front in the vehicle interior. FIG. 1A schematically illustrates a design face 22 of the overhead console 10 as viewed from a user within a vehicle interior. A structure 24 located on the rear side of the design face 22 is to be disposed inside the ceiling and is invisible to the user.

A vehicle illumination apparatus 12 is incorporated in the overhead console 10. The vehicle illumination apparatus 12 (hereinafter simply referred to as an "illumination apparatus 12") is held by a holder 20. The illumination apparatus 12 includes two light sources that are LEDs, and a lens 16. FIG. 1B illustrates a design face of the lens 16, and FIG. 1C is a perspective view of the lens 16.

As illustrated in FIG. 1C, the lens 16 has a symmetrical shape. The lens 16 is a solid member, and includes a U-shape body 32 and two light guides 30 connected to opposite ends of the body 32, respectively.

Each of the two light guides 30 has, at its tip end, a light incident portion 40 (light receiving portion) where light from the light source enters. Each light guide 30 emits part of the light entering the light incident portion 40 into the vehicle interior from a light emitting portion located opposite to the light incident portion 40, to thereby function as a spot illumination portion. The body 32 includes a dot-like lens cut portion. Part of the light from the two light sources is directed to the body 32 through the two light guides 30 and irradiates the dot-like lens cut portion. In this manner, the body 32 functions as a decorating illumination portion (such as an ambient lighting system or an atmosphere lamp that provides a specific atmosphere).

In the following description, the right side of the lens 16 in FIG. 1C, including the right light guide 30 and a portion of the body 32 connected to the right light guide 30, will be described. The left side of the lens 16 in FIG. 1C has a similar configuration.

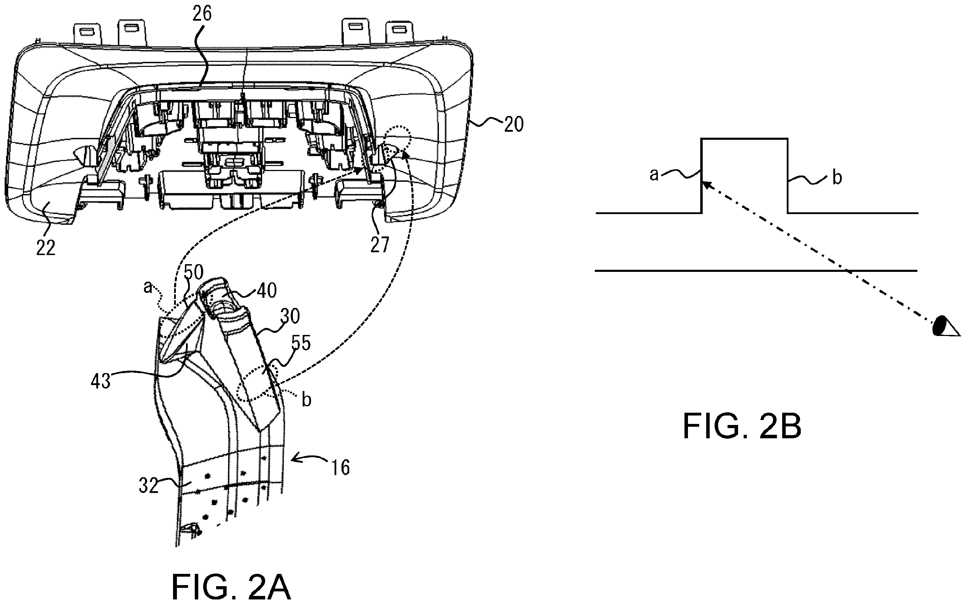

FIG. 2A shows, in the top part, the holder 20, and shows, in the bottom part, part of the lens 16 (the right side of the lens 16 in FIG. 1C). As illustrated in FIG. 2A, the holder 20 includes a guide 26 in which the lens 16 is placed. The holder 20 further includes a recess 27 that accommodates the light guide 30 of the lens 16. The light guide 30 is disposed in the recess 27, with the light source being disposed toward the bottom of the recess 27.

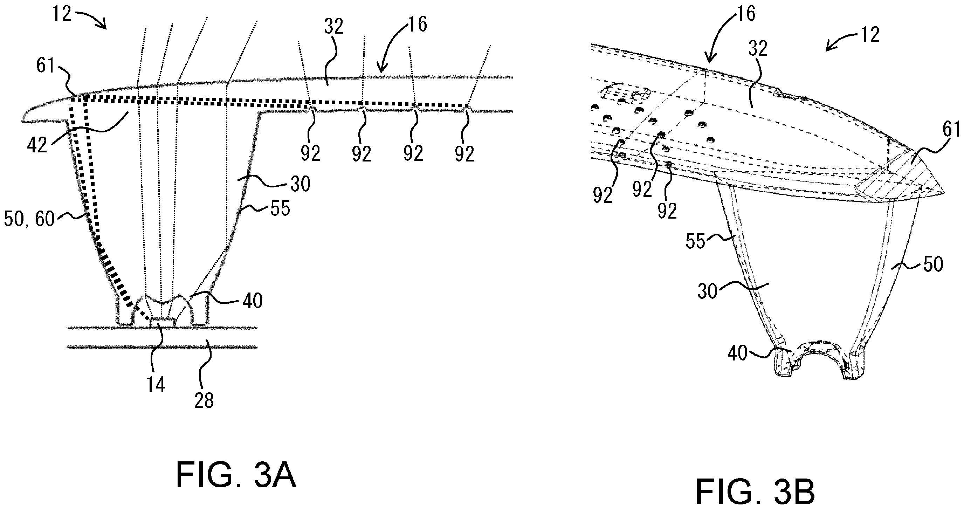

The light guide 30 includes a side face 50 facing outward of the lens and a side face 55 opposite to the side face 50, as illustrated in FIG. 2A. The side face 50 functions as a reflection face 60 that reflects light from a light source 14 toward a reflection face 61 of the body 32, as illustrated in FIG. 3A. Specifically, part of the light from the light source 14 is directed toward the reflection face 61 of the body 32 and is reflected on the reflection face 61, and the light then irradiates lens cut portions 92 of the body 32. Hereinafter, the side face 50 of the light guide 30 will be referred to as a reflection side face 50. Other side faces of the light guide 30 also have a function to reflect the light from the light source 14.

As illustrated in FIG. 2A, the side face 55 (portion "b") of the light guide 30 is disposed toward the bottom on the right side in the recess 27 of the holder 20, and the reflection side face 50 (portion "a") of the light guide 30 is disposed toward the front on the left side in the recess 27 of the holder 20.

If the light guide 30 has side faces adjacent to each other that form a corner having a small radius R, the light converges at the corner, which causes glare to a user looking at the corner. As illustrated in the bottom part of FIG. 2A, the side face 55 and an adjacent side face of the light guide 30 form a corner having a small R, and the light converges to the corner. However, the side face 55 (portion "b") of the light guide 30 is to be placed toward the bottom on the right side in the recess 27 and is therefore invisible to the user, as illustrated in the schematic view of FIG. 2B. Thus, the side face 55 (portion "b") of the light guide 30 does not cause glare to the user.

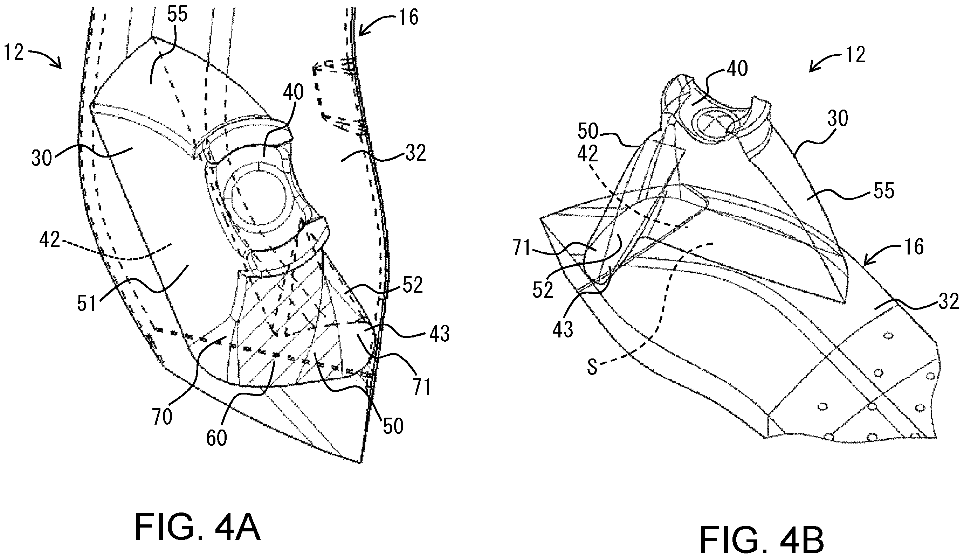

Meanwhile, the light guide 30 includes the corner (portion "a") between the reflection side face 50 and an adjacent side face, which is disposed toward the front on the left side in the recess 27. As illustrated in the schematic view of FIG. 2B, the portion "a" is visible to the user. Here, the user can visually recognize the corner because the lens 16 is transparent. In the present embodiment, corners 70 and 71 (see FIG. 4A) between the reflection side face 50 and respective adjacent side faces are rounded to reduce convergence of light at the corners 70 and 71, thereby making the user less likely to experience glare.

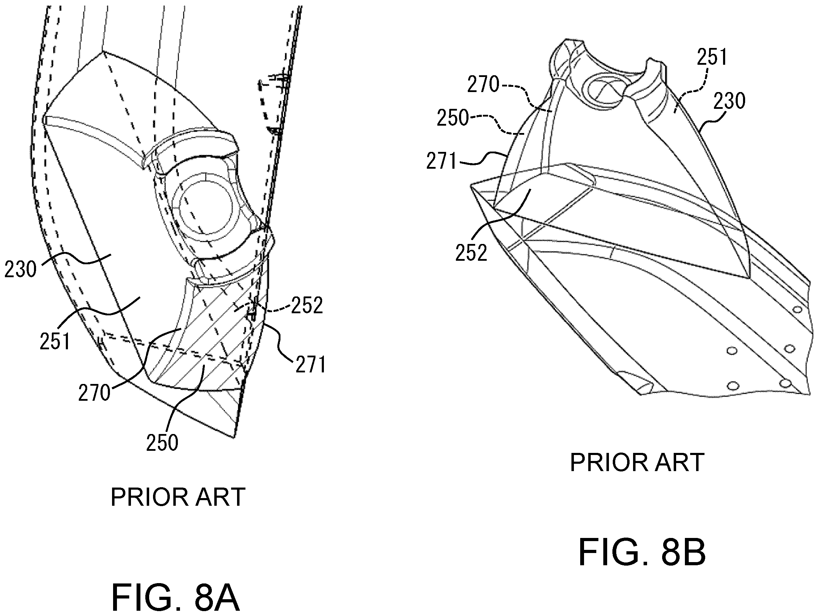

FIGs. 8A and 8B illustrate a light guide 230 according to prior art. Here, FIG. 8B illustrates part of the lens seen through the light guide 230. As illustrate in FIG. 8A, the light guide 230 has corners 270 and 271 having a small radius R between a reflection side face 250 and adjacent side faces 251 and 252, respectively, and light converges at these corners 270 and 271. The corners 270 and 271 of the light guide 230 are to be disposed toward the front on the left side (portion "a" in FIG. 2B) in the recess 27 of the holder 20 illustrated in FIG. 2A; therefore, these corners 270 and 271 are visible to the user. This configuration causes glare to the user looking at the corners 270 and 271. According to the present embodiment, to address this deficiency, the corners 70 and 71 (see FIG. 4A) are rounded to thereby reduce convergence of light at the corners 70 and 71 and prevent the user from being exposed to glare.

The lens 16 according to the present embodiment will be further described. FIG. 3A schematically illustrates how the light travels within the lens 16. FIG. 3B is a perspective view partially illustrating the lens 16, and shows the reflection face 61 of the body 32 with hatching. As illustrated in FIG. 3A, the light source 14 or LED is disposed on a base plate 28. The light guide 30 is disposed opposite to the light source 14 and extends toward the vehicle interior (upward in FIG. 3A). The body 32 is connected to an end of the light guide 30 adjacent to the vehicle interior and extends in a direction intersecting the light guide 30. The body 32 includes, on its rear face, the plurality of lens cut portions 92.

The light from the light source 14 is reflected on the reflection side face 50 of the light guide 30 and travels toward the vehicle interior. Then, part of the light is further reflected on the reflection face 61 of the body 32 and guided in the extending direction of the body 32, and irradiates the lens cut portions 92. This allows the body 32 to function as a decorating illumination portion. The light guide 30 emits part of the light entering the light incident portion 40 from the light source 14, through the light emitting portion 42 opposite to the light incident portion 40 into the vehicle interior, to thereby function as a spot illumination portion.

FIG. 4A illustrates the light guide 30 viewed in the direction of the light source, and shows the reflection side face 50 (reflection face 60) with hatching. FIG. 4B is a perspective side view of the light guide 30. The light guide 30 has an extended portion 43 adjacent to the reflection side face 50. This configuration increases the width of the reflection side face 50 as compared to the side face 55 located opposite to the reflection side face 50, as illustrated in FIG. 4A. Further, as illustrated in FIG. 4B, the region where the light guide 30 and the body 32 are connected has a cross section S (a cross section along a direction intersecting the extending direction of the light guide 30) having an L shape. FIG. 4B shows part of the lens seen through the light guide 30.

As described above, increasing the width of the reflection side face 50 enables the corners 70 and 71 between the reflection side face 50 and the respective adjacent side faces 51 and 52 to be rounded and secures a sufficient area of the reflection side face 50. This enables the reflection side face 50 to direct a large amount of light from the light source 14 (FIG. 3A) to the reflection face 61 of the body 32 and thereby enables the body 32 to function as the decorating illumination portion. Specifically, it is possible to direct a large amount of light to the lens cut portions 92.

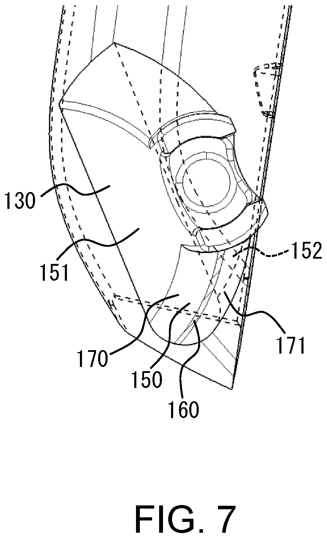

FIG. 7 illustrates a light guide 130 according to a comparison example. The light guide 130 includes a reflection side face 150, and side faces 151 and 152 adjacent to the reflection side face 150, respectively, and these side faces form corners 170 and 171, respectively, having a large radius R. This configuration prevents convergence of light at these corners 170 and 171, thereby preventing the user from being exposed to glare. However, this light guide 130 does not include the extended portion 43 as illustrated in FIG. 4A and therefore does not have an increased width of the reflection side face 150. Further, this configuration includes the corners 170 and 171 having a large R, which results in a decrease in the area of the reflection face 160 (hatched portion in FIG. 7). This prevents the reflection face 160 from directing a large amount of light to the reflection face 61 (FIG. 3A) of the body 32. Meanwhile, the present embodiment (see FIG. 4A) has the reflection side face 50 having an increased width, and can overcome the disadvantage of the comparison example.

However, if the configuration including the reflection side face 150 not having an increased width as illustrate in FIG. 7 has the corners 170 and 171 having a slightly decreased radius R to thereby secure the area of the reflection face 160, the above disadvantage may not occur. Therefore, the comparison example as illustrated in FIG. 7 is not excluded from the present disclosure.

It may be considered that, in the present embodiment, the width of the entire light guide 30 including the side face 55 (see FIG. 4A) is increased or the thickness of the entire light guide 30 is increased. This configuration, however, increases the size of the light guide 30, and the undersurface (design face) of the body 32 located below the light guide 30 may have a surface sink. Therefore, only the reflection side face 50 should have an increased width, as illustrated in FIG. 4A and 4B.

Regarding the rounded corners 70 and 71 of the light guide 30 according to the present embodiment, the sizes of the corners 70 and 71 are greater in a portion close to the light emitting portion 42 than in a portion close to the light incident portion 40, as illustrated in FIG. 4A. More specifically, the corners 70 and 71 close to the light incident portion 40 have a smaller radius R, while the corners 70 and 71 close to the light emitting portion 42 have a larger radius R. This makes light less likely to converge at the corners 70 and 71, while reducing the size and weight of the light guide 30.

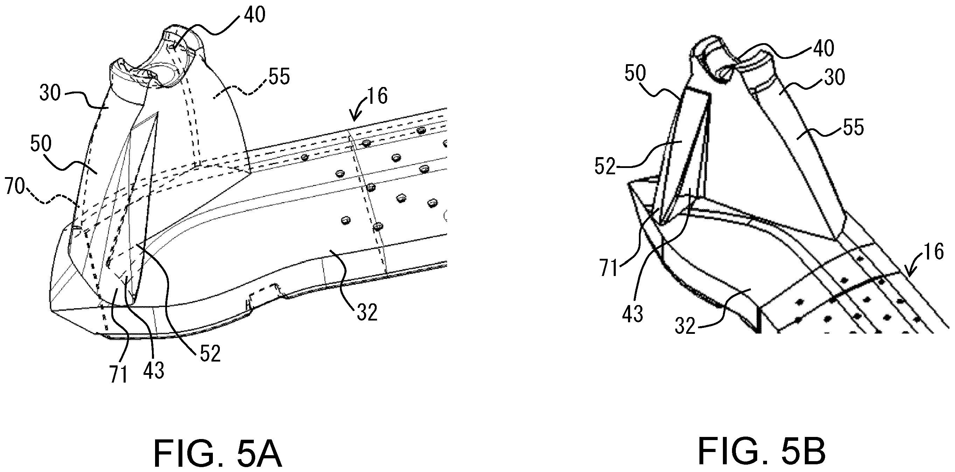

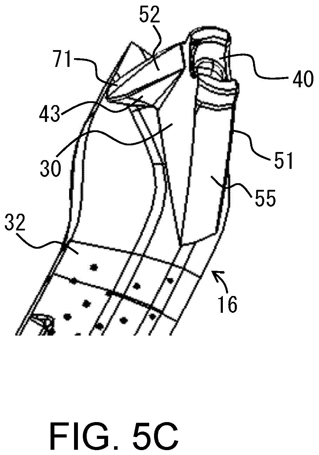

FIGs. 5A, 5B, and 5C are perspective views of the light guide 30 as seen in different directions. The detailed shape of the extended portion 43 of the light guide 30 can be understood from these drawings.

The illumination apparatus 12 according to the present embodiment described above, including the light guide 30 having the rounded corners 70 and 71, as illustrated in FIG. 4A, enables reduction in convergence of light at these corners 70 and 71. This makes the user looking at the corners 70 and 71 less likely to experience glare.

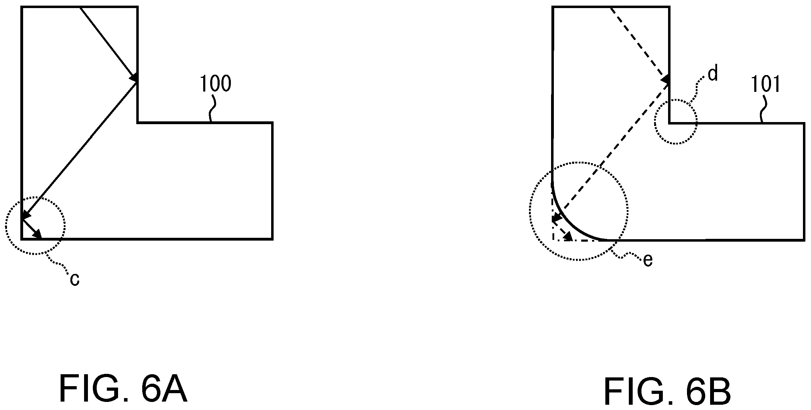

Convergence of light within the lens will be described. FIGs. 6A and 6B illustrate cross sections of the lens 100 and the lens 101, respectively. Note that these lenses 100 and 101 are not directly relevant to the lens 16 according to the present embodiment. The corner of the lens formed by lens faces forming an interior angle of less than 180°, as indicated with portion "c" in FIG. 6A, which is adjacent to the reflection face, causes glare due to convergence of light at the corner. Meanwhile, the corner of the lens formed by two faces forming an interior angle of 180° or greater, as indicated with portion "d" in FIG. 6B, does not cause glare to the user in the absence of light convergence.

Modifying the portion "c" in FIG. 6A to have a rounded shape as in portion "e" in FIG. 6B results in less convergence of light and thus reduces glare. Based on this principle, the light guide 30 according to the present embodiment includes the corners 70 and 71 having a large radius R, thereby reducing light convergence at the corners 70 and 71.

The light guide 30 having a corner with a small radius R may also reduce glare by providing grains on the corner. This configuration, however, increases the number of processes or may lower design properties by providing the grains. Therefore, it would be more effective to increase the radius R of the corners 70 and 71 as in the present embodiment. However, providing grains may not be excluded from the present embodiment. Specifically, in the present embodiment, the corners 70 and 71 have an increased radius R to thereby reduce glare; therefore, it is possible to decrease the density of the grains, if provided, to thereby enhance the design properties.

While in the embodiment described above, the light source 14 is an LED, the light source 14 may be an incandescent lamp, for example. Further, while the illumination apparatus 12 described above is a combination of a spot illuminator and a decorating illuminator, the illumination apparatus 12 may be a combination of a dome lamp, a vanity mirror lamp, a luggage room lamp, or other lamps, with a decorating illuminator.

## Claims

1. A vehicle illumination apparatus (12) comprising:
a light source (14); and
a lens (16), wherein
the lens (16) includes a light guide (30) disposed opposite to the light source (14) and extending toward a vehicle interior, and a body (32) connected to an end of the light guide (30) adjacent to the vehicle interior and extending in a direction intersecting the light guide (30);
the lens (16) is configured to cause light from the light source (14) to be reflected on a side face (50) of the light guide (30) and travel toward the vehicle interior, at least part of the light reflected on the side face (50) of the light guide (30) being further reflected on a reflection face (61) of the body (32) and directed in a direction in which the body (32) extends, thereby allowing at least part of the body (32) to function as a decorating illumination portion, and
the side face (50) of the light guide (30) that reflects the light, or a light reflection face, and a further side face (51,52) of the light guide (30) adjacent to the light reflection face form a corner (70, 71) that has a rounded shape.

2. The vehicle illumination apparatus (12) according to claim 1, wherein
the side face (50) of the light guide (30), or the light reflection face, has a greater width than an opposite side face (55) of the light guide (30).

3. The vehicle illumination apparatus (12) according to claim 2, wherein
a connection portion connecting the light guide (30) and the body (32) has an L-shape cross section.

4. The vehicle illumination apparatus (12) according to any one of claims 1 to 3, wherein
the light guide (30) includes a light incident portion (40) that the light from the light source (14) enters and a light emitting portion (42) disposed opposite to the light incident portion (42), and
in association with the rounded shape of the corner (70, 71) of the light guide (30), the corner (70, 71) has a larger radius in a portion close to the light emitting portion (42) than in a portion close to the light incident portion (40).

5. The vehicle illumination apparatus (12) according to any one of claims 1 to 3, wherein
the light guide (30) is configured to emit part of light entering a light incident portion (40) from the light source (14) into the vehicle interior through a light emitting portion (42) located opposite to the light incident portion (40), to thereby function as a spot illumination portion.

6. The vehicle illumination apparatus (12) according to any one of claims 1 to 3, wherein,
the corner (70, 71) of the light guide (30) is located at a position that is visible to an occupant within the vehicle interior.
